(19) **Europäisches Patentamt / European Patent Office / Office européen des brevets**

(11) **EP 1 852 997 B1**

(12) **EUROPEAN PATENT SPECIFICATION**

(45) Date of publication and mention
of the grant of the patent:
**18.01.2017 Bulletin 2017/03**

(51) Int Cl.:
*H04L 5/02* (2006.01)      *H04L 27/26* (2006.01)
*H04B 7/005* (2006.01)      *H04B 7/06* (2006.01)

(21) Application number: **06017863.9**

(22) Date of filing: **28.08.2006**

(54) **Apparatus and method for broadcast superposition and cancellation in a multi-carrier wireless network**

Vorrichtung und Verfahren zur Broadcastüberlagerung und -Ausschaltung in einem Mehrträger-Kommunikationsnetz

Appareil et méthode de superposition et annulation de diffusion dans un réseau sans fil multi-porteuse

(84) Designated Contracting States:
**DE FI FR GB NL SE**

(30) Priority: **01.05.2006 US 414814**

(43) Date of publication of application:
**07.11.2007 Bulletin 2007/45**

(73) Proprietor: **Samsung Electronics Co., Ltd.
Suwon-si, Gyeonggi-do, 443-742 (KR)**

(72) Inventor: **Khan, Farooq
Allen, Collin County, TX 75002 (US)**

(74) Representative: **Nederlandsch Octrooibureau
P.O. Box 29720
2502 LS The Hague (NL)**

(56) References cited:
**EP-A- 1 734 684        WO-A-2006/036759
US-A1- 2005 058 089**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND OF THE INVENTION**

The present application relates generally to wireless communications and, more specifically, to apparatuses and methods for superposition of broadcast and unicast traffic and interference cancellation in a multicarrier wireless network.

Orthogonal frequency division multiplexing (OFDM) is a multi-carrier transmission technique in which a user transmits on many orthogonal frequencies (or subcarriers). The orthogonal subcarriers are individually modulated and separated in frequency such that they do not interfere with one another. This provides high spectral efficiency and resistance to multipath effects. An orthogonal frequency division multiple access (OFDMA) system allows some subcarriers to be assigned to different users, rather than to a single user. Today, OFDM and OFDMA technology are used in both wireline transmission systems, such as asymmetric digital subscriber line (ADSL), and wireless transmission systems, such as IEEE-802.11a/g (i.e., WiFi), IEEE-802.16 (e.g., WiMAX), digital audio broadcast (DAB), and digital video broadcast (DVB). This technology is also used for wireless digital audio and video broadcasting.

OFDM networks support the transmission of both broadcast traffic, intended for multiple subscriber stations (i.e., user devices), and unicast traffic, intended for a single subscriber station. Conventional OFDM networks time-multiplex broadcast and unicast traffic in the downlink (i.e., forward channels) by transmitting broadcast and unicast traffic in different downlink transmission time intervals. Accordingly, broadcast traffic may be transmitted in a first transmission time interval (TTI), while unicast traffic is transmitted in at least one TTI other than the first TTI. In general, the duration of each TTI is fixed. The number of OFDM symbols within a TTI may be different for broadcast traffic and unicast traffic. In general, a smaller number of OFDM symbols are carried in a broadcast TTI in order to allow for a longer cyclic prefix (CP).

By way of example, an OFDM network may transmit a 5 millisecond frame in the downlink. Each downlink frame contains eight transmission time intervals, where each TTI is 0.625 milliseconds in duration. Every fourth TTI is reserved for broadcast traffic. Each unicast TTI contains K OFDM symbols and each broadcast TTI contains less than K OFDM symbols.

The signal-to-interference and noise ratio (SINR) for unicast traffic may be written as:

$$SINR_{unicast} = \frac{P}{fP + N_0} \ , \qquad\qquad \text{[Eqn. 1]}$$

where the value P represents the received power at the subscriber station from the same cell and the value f represents the ratio between other cell and same cell signals. In an interference limited situation, which is the case for most cellular deployments, $fP \gg N_0$. Therefore, SINR may be written as:

$$SINR_{unicast} = \frac{P}{fP + N_0} = \frac{P}{fP} = \frac{1}{f} \ . \qquad\qquad \text{[Eqn. 2]}$$

It should be noted that increasing the power, P, does not help to improve unicast SINR.

In the case of broadcast traffic using OFDM, the signals received by a subscriber station from multiple synchronized base stations are orthogonal as long as the relative delays of the received signals are within the OFDM symbol cyclic prefix length. Therefore, there is no interference when the same broadcast content is transmitted system-wide, apart from the background noise. The average SINR in an OFDM-based broadcast is given as:

$$SINR_{broadcast} = \frac{KP}{N_0} \ , \qquad\qquad \{\text{Eqn. 3}\}$$

where the value P is the received power from one base station at the subscriber station and the value K is the number of base stations from which broadcast content is received, assuming equal power is received from K base stations. It should be noted that increasing transmit power results in a linear increase of broadcast SINR.

However, conventional OFDM networks that time-multiplex broadcast and unicast traffic suffer wasted power during unicast traffic transmissions. The reason for this wasted power is that transmitting at a higher power does not help to improve SINR for unicast traffic during unicast traffic transmission periods, due to increased interference from neighboring cells. As a result, the same performance may be achieved by transmitting unicast traffic at reduced power.

However, the additional available power cannot be used for broadcast traffic, because broadcast traffic transmissions occur in different time slots (i.e., TTIs) than unicast traffic transmissions. Since either broadcast traffic or unicast traffic, but not both, may be transmitted during a given TTI, it is not possible to allocate the available downlink power adaptively between unicast and broadcast traffic. This results in system inefficiency.

Document ,US 2005/058089 A1 (VIJAYAN RAJIV [US] ET AL) 17 March 2005 (2005-03-17), is an example of TDM technique which may be used for broadcast, multicast, and unicast services.

Therefore, there is a need for improved OFDM (or OFDMA) transmission systems that make better use of the available downlink transmit power.

## SUMMARY OF THE INVENTION

In one embodiment of the present disclosure, a base station is provided for use in an orthogonal frequency division multiplexing (OFDM) wireless network capable of communicating with a plurality of subscriber stations in a coverage area of the OFDM wireless network. The base station is capable of transmitting a first OFDM symbol in a first time slot, wherein the first OFDM symbol comprises a first plurality of subcarriers in which broadcast data directed to a first plurality of subscriber stations is superimposed on unicast data directed to at least one selected subscriber station.

In another embodiment of the present disclosure, a method is provided for transmitting broadcast and unicast data to the subscriber stations. The method comprises the step of transmitting a first OFDM symbol in a first time slot, wherein the first OFDM symbol comprises a first plurality of subcarriers in which broadcast data directed to a first plurality of subscriber stations is superimposed on unicast data directed to at least one selected subscriber station.

In another embodiment, a base station is provided for use in an OFDM wireless network capable of communicating with a plurality of subscriber stations in a coverage area of the OFDM wireless network. The base station is capable of transmitting a first OFDM symbol in a first time slot from a first antenna and a second OFDM symbol in the first time slot from a second antenna. The first OFDM symbol comprises a first plurality of subcarriers that transmit broadcast data to a first plurality of subscriber stations and the second OFDM symbol comprises a second plurality of subcarriers that transmit unicast data to at least one selected subscriber station. At least some of the first plurality of subcarriers and the second plurality of subcarriers are the same subcarriers, such that the broadcast data is superimposed on the unicast data during transmission over the air.

In still another embodiment, a first subscriber station is provided for communicating with an OFDM wireless network. The first subscriber station receives a first OFDM symbol in a first time slot, wherein the first OFDM symbol comprises a first plurality of subcarriers in which broadcast data directed to a first plurality of subscriber stations is superimposed on unicast data directed to at least one selected subscriber station. The first subscriber station comprises broadcast demodulation and decoding circuitry for receiving broadcast pilot signals and combined broadcast and unicast data generated from the received first OFDM symbol and extracting a broadcast data stream from the combined broadcast and unicast data. The first subscriber station further comprises cancellation circuitry for cancelling the extracted broadcast data stream from the combined broadcast and unicast data to thereby recover unicast data directed to the first subscriber station.

Before undertaking the DETAILED DESCRIPTION OF THE INVENTI ON below, it may be advantageous to set forth definitions of certain words and phras es used throughout this patent document: the terms "include" and "comprise," as we 11 as derivatives thereof, mean inclusion without limitation; the term "or," is inclusiv e, meaning and/or; the phrases "associated with" and "associated therewith," as well as derivatives thereof, may mean to include, be included within, interconnect with, c ontain, be contained within, connect to or with, couple to or with, be communicable with, cooperage with, interleave, juxtapose, be proximate to, be bound to or with, hav e, have a property of, or the like. It should be noted that the functionality associated with any particular controller may be centralized or distributed, whether locally or re motely. Definitions for certain words and phrases are provided throughout this paten t document, those of ordinary skill in the art should understand that in many, if not m ost instances, such definitions apply to prior, as well as future uses of such defined w ords and phrases.

## BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGURE 1 illustrates an exemplary wireless network that superimposes broadcast traffic on unicast traffic in the downlink according to the principles of the present disclosure;
FIGURE 2 is a high-level diagram of an OFDM base station according to one embodiment of the present disclosure;
FIGURE 3 illustrates an exemplary subscriber station in greater detail according to one embodiment of the disclosure;

FIGURE 4 is a high-level diagram of an OFDM base station that superimposes broadcast traffic on unicast traffic in the downlink according to an alternate embodiment of the disclosure;

FIGURE 5 is a high-level diagram of an alternate embodiment of a base station that uses Hadamard Transforms;

FIGURE 6 is a high-level diagram of an alternate embodiment of a base station that uses FFT pre-coding; and

FIGURE 7 illustrates an exemplary subscriber station in greater detail according to one embodiment of the disclosure.

## DETAILED DESCRIPTION OF THE INVENTION

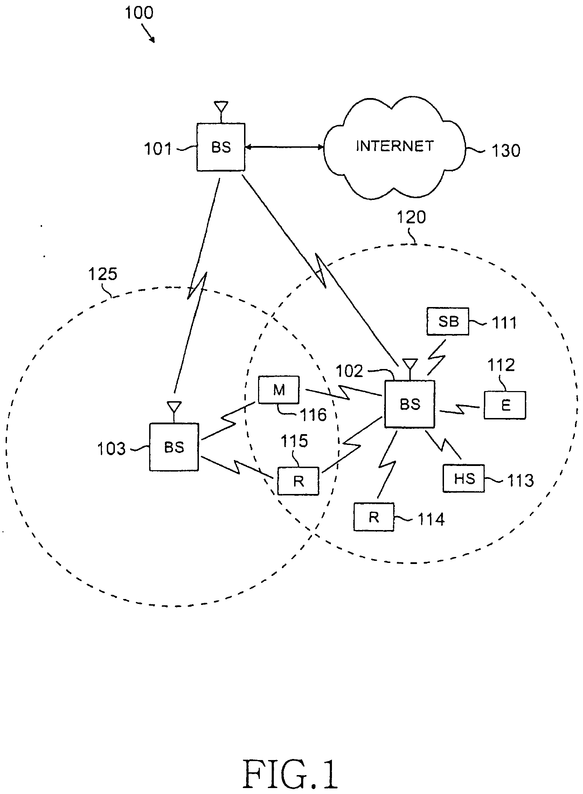

FIGURES 1 through 7, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged communication system.

The present disclosure is directed to a transmission technique in which broadcast traffic is superimposed on unicast traffic in the downlink. The superimposed broadcast signal is decoded and cancelled at a receiver that recovers the unicast signal. This provides simultaneous transmission of broadcast and unicast traffic using the same subcarrier resources and therefore also allows for adaptive power allocation between broadcast traffic and unicast traffic. This results in higher spectral efficiency.

FIGURE 1 illustrates exemplary wireless network 100, which superimposes broadcast traffic on unicast traffic in the downlink according to the principles of the present disclosure. In the illustrated embodiment, wireless network 100 includes base station (BS) 101, base station (BS) 102, base station (BS) 103, and other similar base stations (not shown). Base station 101 is in communication with base station 102 and base station 103. Base station 101 is also in communication with Internet 130 or a similar IP-based network (not shown).

Base station 102 provides wireless broadband access (via base station 101) to Internet 130 to a first plurality of subscriber stations within coverage area 120 of base station 102. The first plurality of subscriber stations includes subscriber station 111, which may be located in a small business (SB), subscriber station 112, which may be located in an enterprise (E), subscriber station 113, which may be located in a WiFi hotspot (HS), subscriber station 114, which may be located in a first residence (R), subscriber station 115, which may be located in a second residence (R), and subscriber station 116, which may be a mobile device (M), such as a cell phone, a wireless laptop, a wireless PDA, or the like.

Base station 103 provides wireless broadband access (via base station 101) to Internet 130 to a second plurality of subscriber stations within coverage area 125 of base station 103. The second plurality of subscriber stations includes subscriber station 115 and subscriber station 116. In an exemplary embodiment, base stations 101-103 may communicate with each other and with subscriber stations 111-116 using OFDM or OFDMA techniques.

Base station 101 may be in communication with either a greater number or a lesser number of base stations. Furthermore, while only six subscriber stations are depicted in FIGURE 1, it is understood that wireless network 100 may provide wireless broadband access to additional subscriber stations. It is noted that subscriber station 115 and subscriber station 116 are located on the edges of both coverage area 120 and coverage area 125. Subscriber station 115 and subscriber station 116 each communicate with both base station 102 and base station 103 and may be said to be operating in handoff mode, as known to those of skill in the art.

Subscriber stations 111-116 may access voice, data, video, video conferencing, and/or other broadband services via Internet 130. In an exemplary embodiment, one or more of subscriber stations 111-116 may be associated with an access point (AP) of a WiFi WLAN. Subscriber station 116 may be any of a number of mobile devices, including a wireless-enabled laptop computer, personal data assistant, notebook, handheld device, or other wireless-enabled device. Subscriber stations 114 and 115 may be, for example, a wireless-enabled personal computer (PC), a laptop computer, a gateway, or another device.

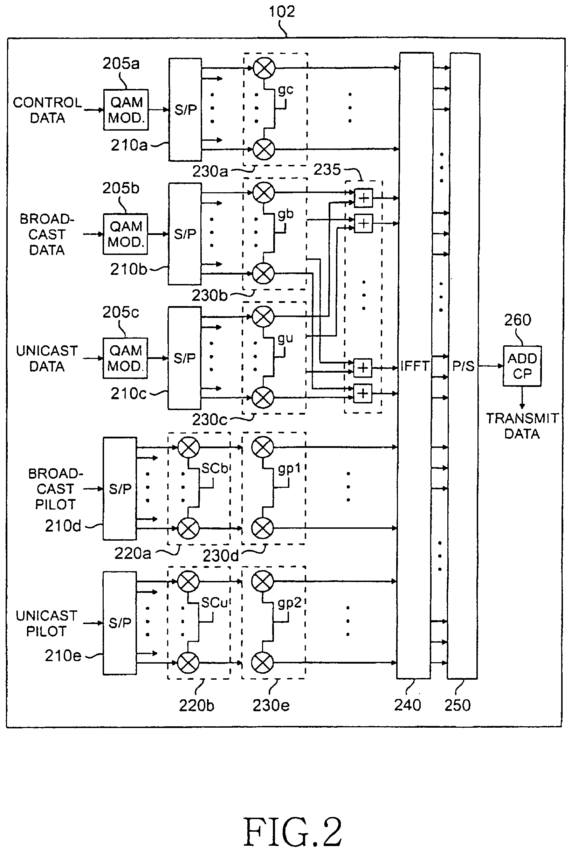

FIGURE 2 is a high-level diagram of base station 102, which superimposes broadcast traffic on unicast traffic in the downlink according to the principles of the present disclosure. Base station 102 comprises a plurality of quadrature amplitude modulation (QAM) blocks 205, including exemplary QAM blocks 205a, 205b and 205c, and a plurality of serial-to-parallel (S/P) blocks 210, including exemplary S/P blocks 210a, 210b, 210c, 210d and 210e. Base station (BS) 102 further comprises scrambling code multiplier blocks 220a and 220b, a plurality of gain multiplier blocks 230, including exemplary gain multiplier blocks 230a, 230b, 230c, 230d and 230e, adder block 235, inverse Fast Fourier Transform (IFFT) block 240, parallel-to-serial (P/S) block 250, and add cyclic prefix (CP) block 260. At least some of the components in FIGURE 2 may be implemented in software while other components may be implemented by configurable hardware or a mixture of software and configurable hardware. In particular, it is noted that the IFFT block in FIGURE 2 may be implemented as configurable software algorithms, where the value of IFFT size may be modified according to the implementation.

Streams of broadcast data symbols, unicast data symbols, and control data symbols (e.g., pilot signal, ACK/NACK messages) are separately coded (not shown) using a channel code, such as convolutional code, Turbo code or low-density parity check (LDPC) code. The coded broadcast, unicast and control symbols are applied to the inputs of QAM blocks 210a-c. QAM block 210a modulates the control symbol stream to produce a first sequence of frequency-domain modulation symbols. QAM block 210b modulates the broadcast symbol stream to produce a second sequence of frequency-domain modulation symbols. The broadcast symbol stream comprises one stream of broadcast data directed to a plurality of subscriber stations. QAM block 210c modulates the unicast symbol stream to produce a third sequence of frequency-domain modulation symbols. The unicast symbol stream may comprise a single unicast data stream directed to a single subscriber station or may comprise a plurality of unicast data substreams, where each unicast data substream is directed to a different subscriber station.

S/P block 210a converts (i.e., de-multiplexes) to parallel format the first sequence of serial QAM control symbols from QAM block 205a and selectively maps the parallel format QAM control symbols to selected OFDM subcarriers at the inputs of IFFT block 240. However, each of the QAM control symbols from S/P block 210a is first multiplied (i.e., scaled) by a control gain factor, gc, by one of the multipliers in gain multiplier block 230a. The amplitude-scaled QAM control symbols are then applied to the selected inputs of IFFT block 240.

Similarly, S/P block 210b converts (de-multiplexes) to parallel format the second sequence of serial QAM broadcast symbols from QAM block 205b and selectively maps the parallel format QAM broadcast symbols to selected OFDM subcarriers at the inputs of IFFT block 240. However, each of the QAM broadcast symbols from S/P block 210b is first multiplied (scaled) by a broadcast gain factor, gb, by one of the multipliers in gain multiplier block 230b. The amplitude-scaled QAM broadcast symbols are then applied to the inputs of the adders in adder block 235 and are added to corresponding amplitude-scaled QAM unicast symbols from gain multiplier block 230c. The sums from adder block 235 are applied to the selected inputs of IFFT block 240.

Likewise, S/P block 210c converts (de-multiplexes) to parallel format the third sequence of serial QAM unicast symbols from QAM block 205c and selectively maps the parallel format QAM unicast symbols to selected OFDM subcarriers at the inputs of IFFT block 240. However, each of the QAM unicast symbols from S/P block 210c is first multiplied (scaled) by a unicast gain factor, gu, by one of the multipliers in gain multiplier block 230c. The amplitude-scaled QAM unicast symbols are then added to corresponding amplitude-scaled QAM broadcast symbols from gain multiplier block 230b.

The addition operation performed by adder block 235 superimposes the broadcast data on the unicast data. Adder block 235 adds the broadcast and unicast symbols and maps the combined symbols to OFDM subcarriers at the input of IFFT block 240. The overall broadcast signal is superimposed on the overall unicast signal on a subcarrier-by-subcarrier basis, so that the broadcast symbol corresponding to subcarrier j is superimposed on (i.e., added to) the unicast symbol corresponding to subcarrier j. Thus, twice as much information may be transmitted relative to an implementation in which there is no superposition. In this example, it is assumed that a broadcast symbol is superimposed on a unicast symbol for each subcarrier. However, this is not required and may not be true in most cases. In most situations, the amount of unicast data will be greater than the amount of broadcast data, so that broadcast data will be superimposed on unicast data for only some, but not all, subcarriers.

In order to provide coherent demodulation of broadcast and unicast traffic, reference pilot symbols may be transmitted from base station 101-103 to subscriber stations 111-116. For broadcast data, the same content is transmitted from multiple base stations, so that an overall channel estimate based on transmissions from multiple base stations is required for accurate demodulation of broadcast traffic. However, unicast traffic is transmitted from only a single base station, so that a channel estimate is needed from only a single base station to a subscriber station.

Thus, two different pilot signals are transmitted from a base station when broadcast traffic is superimposed on unicast traffic. In order to differentiate these two pilot signals at the subscriber station, a broadcast scrambling code (SCb) scrambles the broadcast pilot signal and a unicast scrambling code (SCu) scrambles the unicast pilot signal. The unicast scrambling code, SCu, may be different from one base station to another. However, the broadcast scrambling code (SCb) may be common among all the base stations transmitting the same broadcast content.

S/P block 210d receives a known stream of broadcast pilot symbols and converts (de-multiplexes) the broadcast pilot symbols to parallel format. S/P block 210d selectively maps the broadcast pilot symbols to selected OFDM subcarriers at the inputs of IFFT block 240. However, each of the broadcast pilot symbols from S/P block 210d is first multiplied by a broadcast scrambling code, SCb, by one of the multipliers in scrambling code multiplier block 220a and is then multiplied (scaled) by a broadcast pilot gain factor, gp1, by one of the multipliers in gain multiplier block 230d. The scrambled and scaled broadcast pilot symbols are then applied to the selected inputs of IFFT block 240.

S/P block 210e receives a known stream of unicast pilot symbols and converts (de-multiplexes) the unicast pilot symbols to parallel format. S/P block 210e selectively maps the unicast pilot symbols to selected OFDM subcarriers at the inputs of IFFT block 240. However, each of the unicast pilot symbols from S/P block 210e is first multiplied by a unicast scrambling code, SCu, by one of the multipliers in scrambling code multiplier block 220b and is then multiplied (scaled) by a unicast pilot gain factor, gp2, by one of the multipliers in gain multiplier block 230e. The scrambled and scaled unicast pilot symbols are then applied to the selected inputs of IFFT block 240.

In FIGURE 2, scrambling codes are used only with the broadcast pilot signals and the unicast pilot signals.

However, this is by way of illustration only and should not be construed to limit the scope of the disclosure. Those skilled in the art will appreciate that scrambling code multipliers 220 may also be inserted at the outputs of S/P block 210b and S/P block 210c in order to scramble the broadcast data symbols and the unicast data symbols.

IFFT block 240 then performs a size N IFFT operation on the N inputs received from gain multiplier block 230a, adder block 235, and gain multiplier blocks 230d and 230e, and produces N outputs. IFFT block 240 may receive M1 inputs of control data from gain multiplier block 230a, M2 inputs of combined broadcast and unicast data from adder block 235, M3 inputs of broadcast pilot signal from gain multiplier block 230d, and M4 inputs of unicast pilot signal from gain multiplier block 230b. The sum M1+M2+M3+M4 is less than or equal to the size N of IFFT block 240. In some embodiments, the unicast and broadcast pilot signals may be transmitted in different time slots than the unicast symbols, broadcast symbols, and control symbols. In that case, the sum M1+M2 is less than or equal to the size N of IFFT block 240 during time slots in which the unicast symbols, broadcast symbols, and control symbols are transmitted and the sum M3+M4 is less than or equal to the size N of IFFT block 240 during time slots in which the unicast and broadcast pilot signals are transmitted.

It is noted that not all of the M2 inputs from adder block 235 may comprise combined broadcast and unicast data. If the amount of unicast data is larger than the amount of broadcast data (a likely scenario), or vice versa, only some of the M2 inputs from adder block 235 will comprise combined broadcast and unicast data, while other ones of the M2 inputs from adder block 235 will comprise just unicast data (most likely) or just broadcast data. Also, in some embodiments, all inputs from gain multiplier block 230c may represent a single unicast data stream being transmitted to a single subscriber station during one time slot. Alternatively, these inputs may be divided into two or more subgroups of subcarriers, where each subgroup of subcarriers represents a single unicast data stream being transmitted to a single subscriber station during one time slot.

The N outputs from IFFT block 240 are parallel-to-serial converted by P/S block 250 to produce a serial data stream of combined symbols. Finally, add cyclic prefix block 260 adds a cyclic prefix to the output of IFFT block 250 prior to up-conversion (not shown) and transmission.

According to the principles of the present disclosure, base station 102 is capable of modifying the values of the broadcast gain factor, gb, and the unicast gain factor, gu, in order to allocate transmit power in the downlink between broadcast traffic and unicast traffic. This provides a capability of sharing power between broadcast and unicast data.

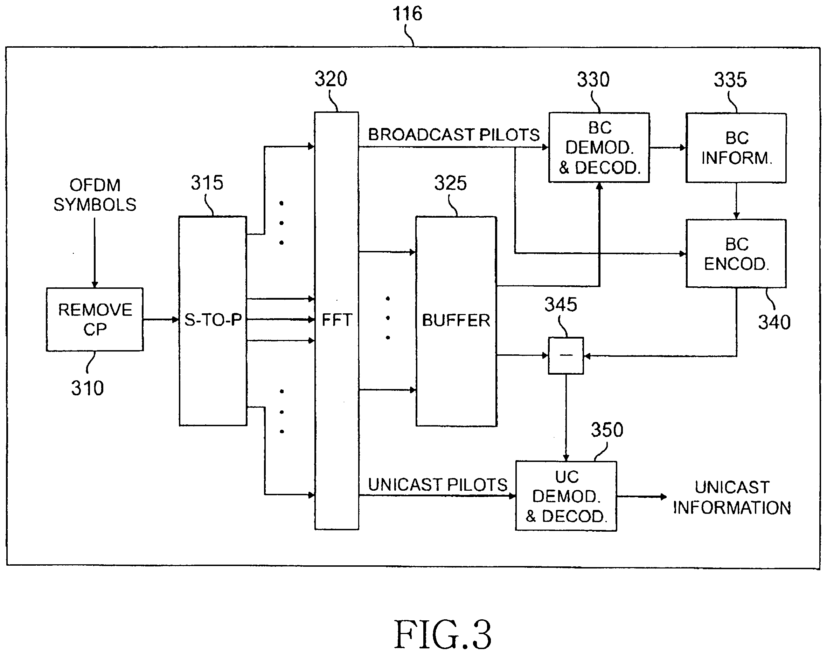

FIGURE 3 illustrates exemplary subscriber station (SS) 116 in greater detail according to one embodiment of the present disclosure. FIGURE 3 illustrates the functional blocks that perform interference cancellation of the broadcast signal in the OFDM receiver of SS 116. After down-conversion (not shown) of the received RF signal, remove cyclic prefix (CP) block 310 receives the incoming OFDM symbols and removes the cyclic prefix associated with each OFMD symbol. Serial-to-parallel block 315 converts the serial OFDM symbol to parallel format and applies the OFDM symbols to the inputs of Fast Fourier Transform (FFT) block 320. FFT block 320 performs an FFT operation and the data output by FFT block 320 is stored in buffer 325 for further processing.

In one processing step, broadcast demodulation and decoding block 330 receives the broadcast pilot signals from FFT block 320 and demodulates and decodes the broadcast information from the data in buffer 325. The decoded broadcast information is stored in broadcast information buffer 335. In another processing step, broadcast encoding block 340 re-encodes the decoded broadcast information in buffer 335 using the broadcast pilot estimates from FFT block 320. In essence, this operation reconstructs the broadcast signal. Cancellation block 345 then cancels (i.e., subtracts) the reconstructed broadcast signal from the buffered overall signal in buffer 325, thereby removing the effect of the broadcast signal from the overall signal. Thus, the output of cancellation block 345 is the resulting overall unicast signal.

Unicast demodulation and decoding block 350 then demodulates and decodes the resulting unicast signal from cancellation block 345 using the unicast pilot estimates from FFT block 320. SS 116 then uses the decoded unicast signal from unicast demodulation and decoding block 350. Ideally, the broadcast and the unicast streams are thereby recovered error free.

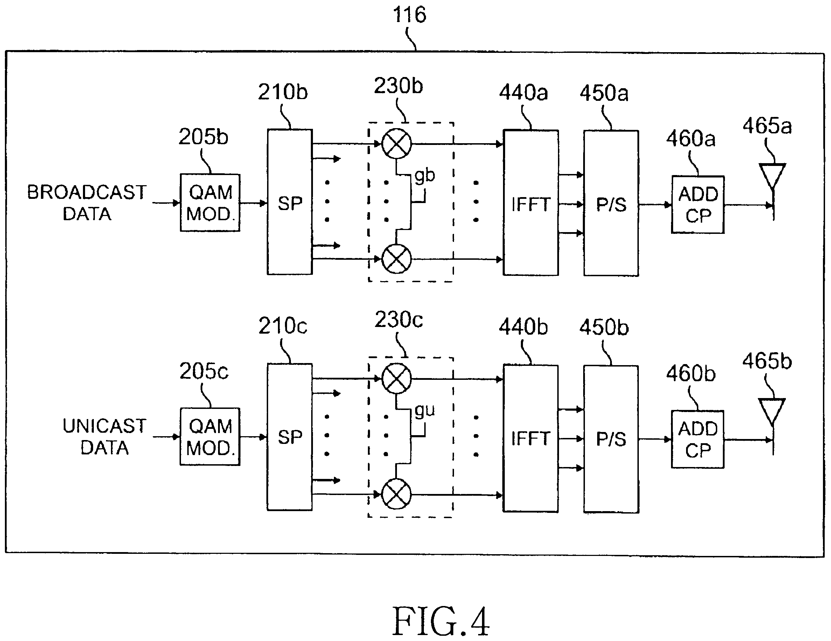

FIGURE 4 is a high-level diagram of base station 102, which superimposes broadcast traffic on unicast traffic in the downlink according to an alternate embodiment of the present disclosure. In the alternate embodiment, the broadcast and unicast traffic are transmitted using the same OFDM subcarriers but from different antennas. Thus, the broadcast and unicast data are combined in the air, rather than by adder block 235.

In the embodiment in FIGURE 4, two transmit paths are implemented. A first transmit path comprises QAM block 205b, serial-to-parallel (S/P) block 210b, gain multiplier block 230b, inverse Fast Fourier Transform (IFFT) block 440a, parallel-to-serial (P/S) block 450a, add cyclic prefix (CP) block 460a and antenna 465a. A second transmit path comprises QAM block 205c, serial-to-parallel (S/P) block 210c, gain multiplier block 230c, inverse Fast Fourier Transform (IFFT) block 440b, parallel-to-serial (P/S) block 450b, add cyclic prefix (CP) block 460b and antenna 465b. The operations of each of the functional blocks in the two transmit paths is analogous to the operations of the corresponding functional blocks in FIGURE 2 and need not be explained in further detail.

The first transmit path receives, encodes and modulates the broadcast data and the second transmit path receives, encodes and modulates the unicast data. However, the encoded and modulated broadcast and unicast streams are mapped to the same OFDM subcarriers using separate IFFT blocks 440 and 440b. The broadcast stream outputs of IFFT block 440a are transmitted from antenna 465a. The unicast stream outputs of IFFT block 440b are transmitted from antenna 465b. Since both broadcast and unicast streams are transmitted using the same bandwidth (i.e., the same set of subcarriers), the broadcast and unicast signals are superimposed in the air after transmission from antennas 465a and 465b.

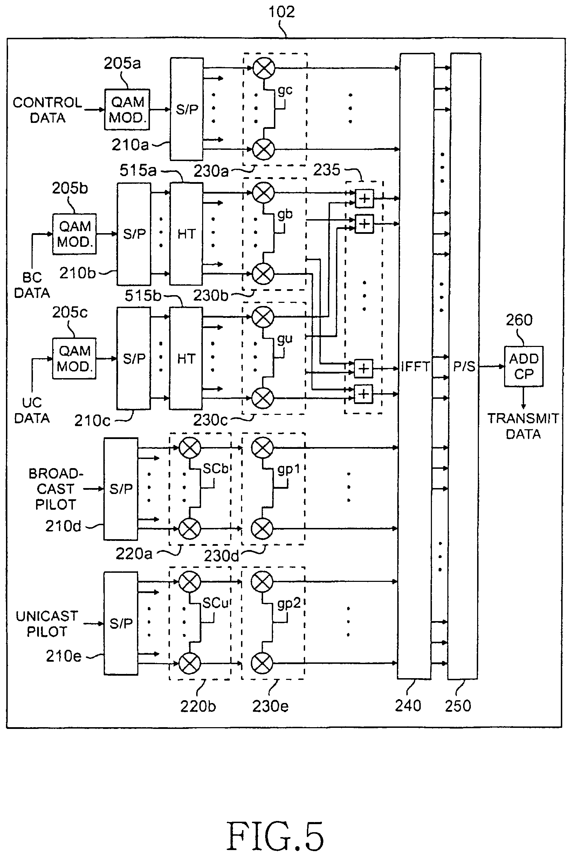

FIGURE 5 is a high-level diagram of base station 102 according to an alternate embodiment of the present disclosure. FIGURE 5 is substantially identical to FOGURE 2, except that Hadamard Transform (HT) blocks 515a and 515b are inserted in the processing paths of the broadcast data and unicast data, respectively. The Hadamard Transform operations are performed on both the broadcast and unicast modulation symbols before mapping to the subcarriers at the inputs of IFFT block 240. The Hadamard Transform operation allows spreading the modulation symbols over multiple carriers, thereby providing frequency-diversity in a frequency-selective wireless multipath channel.

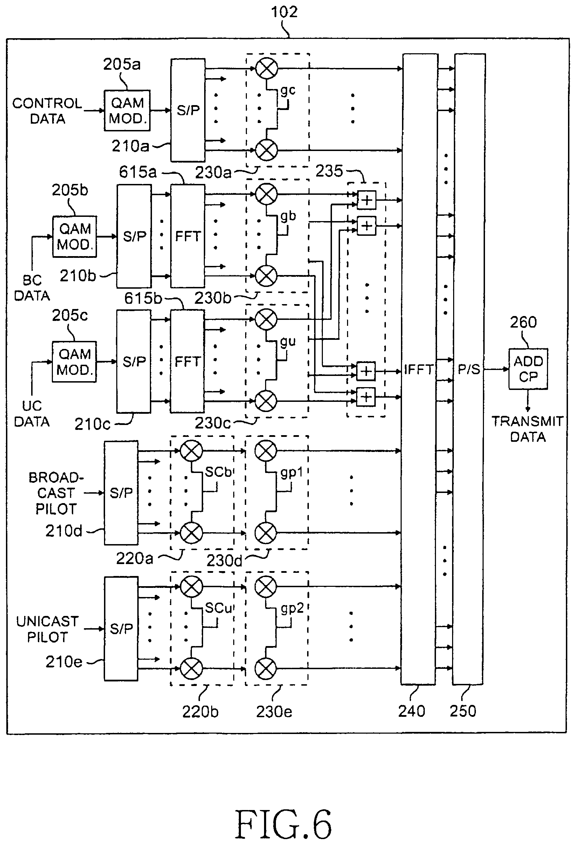

FIGURE 6 is a high-level diagram of base station 102 according to an another alternate embodiment of the present disclosure. FIGURE 6 is substantially identical to FIGURE 2, except that FFT pre-coding blocks 615a and 615b are inserted in the processing paths of the broadcast data and unicast data, respectively. The FFT pre-coding operations are performed on both the broadcast and unicast modulation symbols before mapping to the subcarriers at the inputs of IFFT block 240. Similar to the Hadamard Transform operations, the FFT pre-coding operations allow spreading the modulation symbols over multiple carriers, thereby providing frequency-diversity in a frequency-diversity wireless multipath channel. Techniques for Fourier Transform pre-coding of transmit signals are disclosed in U.S. Patent Application No. 11/374,928, filed March 14, 2006, and entitled "Apparatus And Method For FT Pre-Coding Of Data To Reduce PARR In A Multi-Carrier Wireless Network." The drawings and specification of U.S. Patent Application No. 11/374,928 are hereby incorporated by reference as if fully set forth herein.

It is noted that a Hadamard Transform operation or an FFT pre-coding operation may be performed on only one of the broadcast and unicast streams in order to meet certain performance and complexity targets. Moreover, the broadcast and unicast streams after Hadamard Transform or FFT pre-coding operations may also be mapped to separate IFFTs and transmitted over different antennas, as in FIGURE 4.

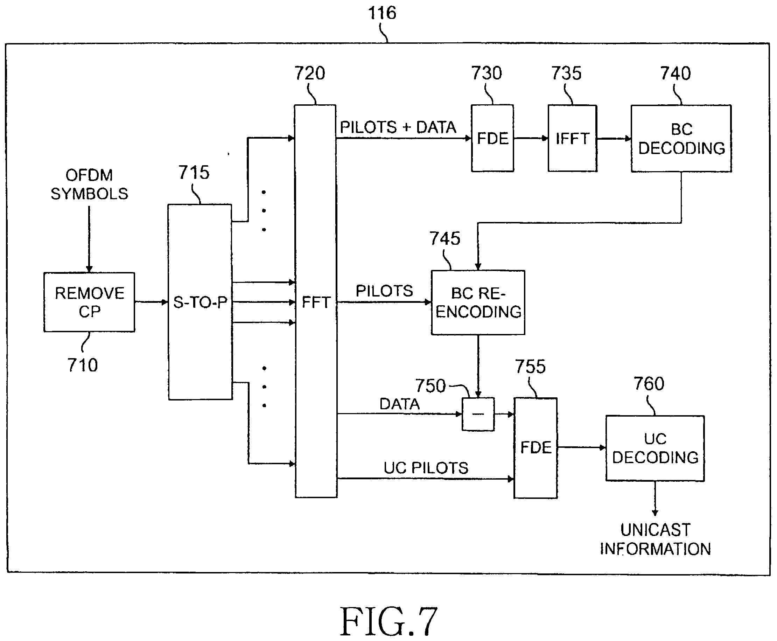

FIGURE 7 illustrates exemplary subscriber station (SS) 116 in greater detail according to one embodiment of the present disclosure. FIGURE 7 illustrates the functional blocks that perform interference cancellation of the broadcast signal in the OFDM receiver of SS 116 when the broadcast stream has been FFT pre-coded as in FIGURE 6. After down-conversion (not shown) of the received RF signal, remove cyclic prefix (CP) block 710 receives the incoming OFDM symbols and removes the cyclic prefix associated with each OFMD symbol. Serial-to-parallel block 715 converts the serial OFDM symbol to parallel format and applies the OFDM symbols to the inputs of Fast Fourier Transform (FFT) block 720. FFT block 720 performs an FFT operation and the data output by FFT block 720 is then processed by frequency-domain equalizer (FDE) 730, IFFT block 735, broadcast (BC) decoding block 740, broadcast (BC) re-encoding block 745, cancellation block 750, frequency-domain equalizer (FDE) 755, and unicast (UC) decoding block 740.

FDE 730 receives the broadcast pilot signals and broadcast data from FFT block 720. FDE 730 uses the known broadcast pilot signals to perform frequency-domain equalization on the broadcast data symbols. IFFT block 735 receives the equalized broadcast data and reverses the FFT pre-coding operation performed by FFT block 615a in FIGURE 6. Broadcast decoding block 740 then decodes the broadcast symbols to recover the original broadcast data stream.

Broadcast re-encoding block 745 uses the broadcast pilot signal estimates to re-encode the broadcast data stream. Cancellation block 750 then cancels (i.e., subtracts) the re-encoded broadcast stream from the overall received signal at the output of FFT block 720. The output of cancellation block 750 comprises the received unicast signal, because the effect of the broadcast signal has been eliminated. FDE 755 then performs frequency-domain equalization on the received unicast signal. Unicast decoding block 760 then decodes the equalized unicast signal to recover the original unicast data stream. It should be noted that if the unicast traffic was FFT pre-coded by FFT block 615b in base station 102, then an IFFT operation (not shown) would also performed on the unicast data at the output of FDE 755.

Although the present disclosure has been described with an exemplary embodiment, various changes and modifications may be suggested to one skilled in the art. It is intended that the present disclosure encompass such changes and modifications as fall within the scope of the appended claims.

**Claims**

1. For use in an orthogonal frequency division multiplexing OFDM wireless network capable of communicating with a plurality of subscriber stations in a coverage area of the OFDM wireless network, a base station capable of transmitting a first OFDM symbol in a first time slot, wherein the first OFDM symbol comprises a first plurality of subcarriers in which broadcast data directed to a first plurality of subscriber stations is superimposed on unicast data directed to at least one selected subscriber station.

**2.** The base station as set forth in Claim 1, wherein the first plurality of subcarriers are distributed across a frequency spectrum allocated to the first OFDM symbol.

**3.** The base station as set forth in Claim 1, wherein the base station is capable of adjusting a broadcast gain factor, gb, used to control the transmit power of the broadcast data in the first plurality of subcarriers.

**4.** The base station as set forth in Claim 3, wherein the base station is capable of adjusting a unicast gain factor, gu, used to control the transmit power of the unicast data in the first plurality of subcarriers.

**5.** The base station as set forth in Claim 4, wherein the first OFDM symbol further comprises a second plurality of subcarriers used to transmit a broadcast pilot signal directed to the first plurality of subscriber stations and a third plurality of subcarriers used to transmit a unicast pilot signal directed to the at least one selected subscriber station.

**6.** The base station as set forth in Claim 5, wherein the base station is capable of adjusting a broadcast pilot gain factor, gp1, used to control the transmit power of the second plurality of subcarriers.

**7.** The base station as set forth in Claim 6, wherein the base station is capable of adjusting a unicast pilot gain factor, gp2, used to control the transmit power of the third plurality of subcarriers.

**8.** An orthogonal frequency division multiplexing OFDM wireless network comprising a plurality of base stations capable of communicating with a plurality of subscriber stations in a coverage area of the OFDM network, wherein each of the plurality of base stations is capable of transmitting a first OFDM symbol in a first time slot, wherein the first OFDM symbol comprises a first plurality of subcarriers in which broadcast data directed to a first plurality of subscriber stations is superimposed on unicast data directed to at least one selected subscriber station.

**9.** The OFDM wireless network as set forth in Claim 8, wherein the first plurality of subcarriers are distributed across a frequency spectrum allocated to the first OFDM symbol.

**10.** The OFDM wireless network as set forth in Claim 8, wherein the base station is capable of adjusting a broadcast gain factor, gb, used to control the transmit power of the broadcast data in the first plurality of subcarriers.

**11.** The OFDM wireless network as set forth in Claim 10, wherein the base station is capable of adjusting a unicast gain factor, gu, used to control the transmit power of the unicast data in the first plurality of subcarriers.

**12.** The OFDM wireless network as set forth in Claim 11, wherein the first OFDM symbol further comprises a second plurality of subcarriers used to transmit a broadcast pilot signal directed to the first plurality of subscriber stations and a third plurality of subcarriers used to transmit a unicast pilot signal directed to the at least one selected subscriber station.

**13.** The OFDM wireless network as set forth in Claim 12, wherein the base station is capable of adjusting a broadcast pilot gain factor, gp1, used to control the transmit power of the second plurality of subcarriers.

**14.** The OFDM wireless network as set forth in Claim 13, wherein the base station is capable of adjusting a unicast pilot gain factor, gp2, used to control the transmit power of the third plurality of subcarriers.

**15.** For use in an orthogonal frequency division multiplexing OFDM network capable of communicating with a plurality of subscriber stations in a coverage area of the OFDM network, a method of transmitting broadcast and unicast data to the subscriber stations, the method comprising the step of
transmitting a first OFDM symbol in a first time slot, wherein the first OFDM symbol comprises a first plurality of subcarriers in which broadcast data directed to a first plurality of subscriber stations is superimposed on unicast data directed to at least one selected subscriber station.

**16.** The method as set forth in Claim 15, wherein the first plurality of subcarriers are distributed across a frequency spectrum allocated to the first OFDM symbol.

**17.** The method as set forth in Claim 15, further comprising the step of adjusting a broadcast gain factor, gb, used to control the transmit power of the broadcast data in the first plurality of subcarriers.

**18.** The method as set forth in Claim 17, further comprising the step of adjusting a unicast gain factor, gu, used to control the transmit power of the unicast data in the first plurality of subcarriers.

**19.** The method as set forth in Claim 18, wherein the first OFDM symbol further comprises a second plurality of subcarriers used to transmit a broadcast pilot signal directed to the first plurality of subscriber stations and a third plurality of subcarriers used to transmit a unicast pilot signal directed to the at least one selected subscriber station.

**20.** The method as set forth in Claim 19, further comprising the step of adjusting a broadcast pilot gain factor, gp1, used to control the transmit power of the second plurality of subcarriers.

**21.** The method as set forth in Claim 20, further comprising the step of adjusting a unicast pilot gain factor, gp2, used to control the transmit power of the third plurality of subcarriers.

**22.** A first subscriber station capable of communicating with an orthogonal frequency division multiplexing OFDM wireless network, wherein the first subscriber station is capable of receiving and processing a first OFDM symbol in a first time slot, wherein the first OFDM symbol comprises a first plurality of subcarriers in which broadcast data directed to a first plurality of subscriber stations is superimposed on unicast data directed to at least one selected subscriber station.

**23.** The first subscriber station as set forth in Claim 22, wherein the first subscriber station comprises broadcast demodulation and decoding circuitry capable of receiving broadcast pilot signals and combined broadcast and unicast data generated from the first OFDM symbol and extracting a broadcast data stream from the combined broadcast and unicast data.

**24.** The first subscriber station as set forth in Claim 23, wherein the first subscribe station further comprises cancellation circuitry capable of cancelling the extracted b roadcast data stream from the combined broadcast and unicast data to thereby recove unicast data directed to the first subscriber station.

**25.** For use in an orthogonal frequency division multiplexing OFDM wireless network capable of communicating with a plurality of subscriber stations in a coverage area of the OFDM wireless network, a base station capable of transmitting a first OFDM symbol in a first time slot from a first antenna and a second OFDM symbol in the first time slot from a second antenna, wherein the first OFDM symbol comprises a first plurality of subcarriers used to transmit broadcast data directed to a first plurality of subscriber stations and the second OFDM symbol comprises a second plurality of subcarriers used to transmit unicast data directed to at least one selected subscriber station, and wherein at least some of the first plurality of subcarriers and the second plurality of subcarriers are the same subcarriers, such that the broadcast data is superimposed on the unicast data during transmission through a communication channel.

**Patentansprüche**

**1.** Basisstation zur Verwendung in einem drahtlosen Orthogonalfrequenzmultiplexnetz, OFDM-Netz, das des Kommunizierens mit mehreren Teilnehmerstationen in einem Abdeckungsgebiet des drahtloses OFDM-Netzes fähig ist, die des Sendens eines ersten OFDM-Symbols in einem ersten Zeitschlitz fähig ist, wobei das erste OFDM-Symbol eine erste Mehrzahl von Hilfsträgern umfasst, in denen Rundsendedaten, die an eine erste Mehrzahl von Teilnehmerstation gerichtet sind, Einfachsendedaten überlagert werden, die an mindestens eine ausgewählte Teilnehmerstation gerichtet sind.

**2.** Basisstation nach Anspruch 1, wobei die erste Mehrzahl von Hilfsträgern über ein Frequenzspektrum hinweg verteilt sind, das dem ersten OFDM-Symbol zugeteilt ist.

**3.** Basisstation nach Anspruch 1, wobei die Basisstation des Einstellens eines Rundsendeverstärkungsfaktors, gb, fähig ist, der verwendet wird, um die Sendeleistung der Rundsendedaten in der ersten Mehrzahl von Hilfsträgern zu steuern.

**4.** Basisstation nach Anspruch 3, wobei die Basisstation des Einstellens eines Einfachsendeverstärkungsfaktors, gu, fähig ist, der verwendet wird, um die Sendeleistung der Einfachsendedaten in der ersten Mehrzahl von Hilfsträgern zu steuern.

**5.** Basisstation nach Anspruch 4, wobei das erste OFDM-Symbol ferner eine zweite Mehrzahl von Hilfsträgern, die verwendet werden, um ein Rundsendepilotsignal zu senden, das an die erste Mehrzahl von Teilnehmerstationen gerichtet ist, und eine dritte Mehrzahl von Hilfsträgern umfasst, die verwendet werden, um ein Einfachsendepilotsignal zu senden, das an die mindestens eine ausgewählte Teilnehmerstation gerichtet ist.

**6.** Basisstation nach Anspruch 5, wobei die Basisstation des Einstellens eines Rundsendepilotverstärkungsfaktors, gp1, fähig ist, der verwendet wird, um die Sendeleistung der zweiten Mehrzahl von Hilfsträgern zu steuern.

**7.** Basisstation nach Anspruch 6, wobei die Basisstation des Einstellens eines Einfachsendepilotverstärkungsfaktors, gp2, fähig ist, der verwendet wird, um die Sendeleistung der dritten Mehrzahl von Hilfsträgern zu steuern.

**8.** Drahtloses Orthogonalfrequenzmultiplexnetz, OFDM-Netz, das mehrere Basisstationen umfasst, das des Kommunizierens mit mehreren Teilnehmerstationen in einem Abdeckungsgebiet des drahtloses OFDM-Netzes fähig sind, wobei jede der mehreren Basisstationen des Sendens eines ersten OFDM-Symbols in einem ersten Zeitschlitz fähig ist, wobei das erste OFDM-Symbol eine erste Mehrzahl von Hilfsträgern umfasst, in denen Rundsendedaten, die an eine erste Mehrzahl von Teilnehmerstation gerichtet sind, Einfachsendedaten überlagert werden, die an mindestens eine ausgewählte Teilnehmerstation gerichtet sind.

**9.** Drahtloses OFDM-Netz nach Anspruch 8, wobei die erste Mehrzahl von Hilfsträgern über ein Frequenzspektrum hinweg verteilt ist, das dem ersten OFDM-Symbol zugeteilt ist.

**10.** Drahtloses OFDM-Netz nach Anspruch 8, wobei die Basisstation des Einstellens eines Rundsendeverstärkungsfaktors, gb, fähig ist, der verwendet wird, um die Sendeleistung der Rundsendedaten in der ersten Mehrzahl von Hilfsträgern zu steuern.

**11.** Drahtloses OFDM-Netz nach Anspruch 10, wobei die Basisstation des Einstellens eines Einfachsendeverstärkungsfaktors, gu, fähig ist, der verwendet wird, um die Sendeleistung der Einfachsendedaten in der ersten Mehrzahl von Hilfsträgern zu steuern.

**12.** Drahtloses OFDM-Netz nach Anspruch 11, wobei das erste OFDM-Symbol ferner eine zweite Mehrzahl von Hilfsträgern, die verwendet werden, um ein Rundsendepilotsignal zu senden, das an die erste Mehrzahl von Teilnehmerstationen gerichtet ist, und eine dritte Mehrzahl von Hilfsträgern umfasst, die verwendet werden, um ein Einfachsendepilotsignal zu senden, das an die mindestens eine ausgewählte Teilnehmerstation gerichtet ist.

**13.** Drahtloses OFDM-Netz nach Anspruch 12, wobei die Basisstation des Einstellens eines Rundsendepilotverstärkungsfaktors, gp1, fähig ist, der verwendet wird, um die Sendeleistung der zweiten Mehrzahl von Hilfsträgern zu steuern.

**14.** Drahtloses OFDM-Netz nach Anspruch 13, wobei die Basisstation des Einstellens eines Einfachsendepilotverstärkungsfaktors, gp2, fähig ist, der verwendet wird, um die Sendeleistung der dritten Mehrzahl von Hilfsträgern zu steuern.

**15.** Verfahren des Sendens von Rundsende- und Einfachsendedaten an die Teilnehmerstationen zur Verwendung in einem Orthogonalfrequenzmultiplexnetz, OFDM-Netz, das des Kommunizierens mit mehreren Teilnehmerstationen in einem Abdeckungsgebiet des OFDM-Netzes fähig ist, wobei das Verfahren den folgenden Schritt umfasst:

Senden eines ersten OFDM-Symbols in einem ersten Zeitschlitz, wobei das erste OFDM-Symbol eine erste Mehrzahl von Hilfsträgern umfasst, in denen Rundsendedaten, die an eine erste Mehrzahl von Teilnehmerstation gerichtet sind, Einfachsendedaten überlagert werden, die an mindestens eine ausgewählte Teilnehmerstation gerichtet sind.

**16.** Verfahren nach Anspruch 15, wobei die erste Mehrzahl von Hilfsträgern über ein Frequenzspektrum hinweg verteilt sind, das dem ersten OFDM-Symbol zugeteilt ist.

**17.** Verfahren nach Anspruch 15, das ferner den Schritt des Einstellens eines Rundsendeverstärkungsfaktors, gb, umfasst, der verwendet wird, um die Sendeleistung der Rundsendedaten in der ersten Mehrzahl von Hilfsträgern zu steuern.

**18.** Verfahren nach Anspruch 17, das ferner den Schritt des Einstellens eines Einfachsendeverstärkungsfaktors, gu, umfasst, der verwendet wird, um die Sendeleistung der Einfachsendedaten in der ersten Mehrzahl von Hilfsträgern zu steuern.

**19.** Verfahren nach Anspruch 18, wobei das erste OFDM-Symbol ferner eine zweite Mehrzahl von Hilfsträgern, die verwendet werden, um ein Rundsendepilotsignal zu senden, das an die erste Mehrzahl von Teilnehmerstationen gerichtet ist, und eine dritte Mehrzahl von Hilfsträgern umfasst, die verwendet werden, um ein Einfachsendepilotsignal zu senden, das an die mindestens eine ausgewählte Teilnehmerstation gerichtet ist.

**20.** Verfahren nach Anspruch 19, das ferner den Schritt des Einstellens eines Rundsendepilotverstärkungsfaktors, gp1, umfasst, der verwendet wird, um die Sendeleistung der zweiten Mehrzahl von Hilfsträgern zu steuern.

**21.** Verfahren nach Anspruch 20, das ferner den Schritt des Einstellens eines Einfachsendepilotverstärkungsfaktors, gp2, umfasst, der verwendet wird, um die Sendeleistung der dritten Mehrzahl von Hilfsträgern zu steuern.

**22.** Erste Teilnehmerstation, die des Kommunizierens mit einem drahtlosen Orthogonalfrequenzmultiplexnetz, OFDM-Netz, fähig ist, wobei die erste Teilnehmerstation des Empfangens und Verarbeitens eines ersten OFDM-Symbols in einem ersten Zeitschlitz fähig ist,
wobei das erste OFDM-Symbol eine erste Mehrzahl von Hilfsträgern umfasst, in denen Rundsendedaten, die an eine erste Mehrzahl von Teilnehmerstation gerichtet sind, Einfachsendedaten überlagert werden, die an mindestens eine ausgewählte Teilnehmerstation gerichtet sind.

**23.** Erste Teilnehmerstation nach Anspruch 22, wobei die erste Teilnehmerstation Rundsendedemodulations- und Decodierschaltungen umfasst, die des Empfangens von Rundsendepilotsignalen und kombinierten Rundsende- und Einfachsendedaten, die aus dem ersten OFDM-Symbol erzeugt werden, und Extrahieren eines Rundsendedatenstroms aus den kombinierten Rundsende-und Einfachsendedaten fähig sind.

**24.** Erste Teilnehmerstation nach Anspruch 23, wobei die erste Teilnehmerstation ferner Aufhebeschaltungen umfasst, die des Aufhebens des extrahierten Rundsendedatenstroms aus den kombinierten Rundsende-und Einfachsendedaten fähig sind, um dadurch Einfachsendedaten wiederherzustellen, die an die erste Teilnehmerstation gerichtet sind.

**25.** Basisstation zur Verwendung in einem drahtlosen Orthogonalfrequenzmultiplexnetz, OFDM-Netz, das des Kommunizierens mit mehreren Teilnehmerstationen in einem Abdeckungsgebiet des drahtloses OFDM-Netzes fähig ist, die des Sendens eines ersten OFDM-Symbols in einem ersten Zeitschlitz von einer ersten Antenne und eines zweiten OFDM-Symbols im ersten Zeitschlitz von einer zweiten Antenne fähig ist, wobei das erste OFDM-Symbol eine erste Mehrzahl von Hilfsträgern umfasst, die verwendet werden, um Rundsendedaten zu senden, die an eine erste Mehrzahl von Teilnehmerstationen gerichtet sind, und das zweite OFDM-Symbol eine zweite Mehrzahl von Hilfsträgern umfasst, die verwendet werden, um Einfachsendedaten zu senden, die an mindestens eine ausgewählte Teilnehmerstation gerichtet sind, und wobei mindestens einige der ersten Mehrzahl von Hilfsträgern und der zweiten Mehrzahl von Hilfsträgern dieselben Hilfsträger sind, sodass die Rundsendedaten den Einfachsendedaten während der Sendung über einen Kommunikationskanal überlagert werden.

## Revendications

**1.** Pour une utilisation dans un réseau sans fil à multiplexage par répartition de fréquence orthogonale, OFDM, capable de communiquer avec une pluralité de stations d'abonné dans une zone de couverture du réseau sans fil OFDM, une station de base capable de transmettre un premier symbole OFDM dans un premier créneau de temps, dans laquelle le premier symbole OFDM comprend une première pluralité de sous-porteuses dans lesquelles des données de diffusion dirigées vers une première pluralité de stations d'abonné sont superposées sur des données de monodiffusion dirigées vers au moins une station d'abonné sélectionnée.

**2.** Station de base selon la revendication 1, dans laquelle la première pluralité de sous-porteuses sont distribuées à travers un spectre de fréquences alloué au premier symbole OFDM.

**3.** Station de base selon la revendication 1, dans laquelle la station de base est capable d'ajuster un facteur de gain de diffusion, gb, utilisé pour réguler la puissance de transmission des données de diffusion dans la première pluralité de sous-porteuses.

4. Station de base selon la revendication 3, dans laquelle la station de base est capable d'ajuster un facteur de gain de monodiffusion, gu, utilisé pour réguler la puissance de transmission des données de monodiffusion dans la première pluralité de sous-porteuses.

5. Station de base selon la revendication 4, dans laquelle le premier symbole OFDM comprend en outre une deuxième pluralité de sous-porteuses utilisées pour transmettre un signal pilote de diffusion dirigé vers la première pluralité de stations d'abonné et une troisième pluralité de sous-porteuses utilisées pour transmettre un signal pilote de monodiffusion dirigé vers l'au moins une station d'abonné sélectionnée.

6. Station de base selon la revendication 5, dans laquelle la station de base est capable d'ajuster un facteur de gain de pilote de diffusion, gp1, utilisé pour réguler la puissance de transmission de la deuxième pluralité de sous porteuses.

7. Station de base selon la revendication 6, dans laquelle la station de base est capable d'ajuster un facteur de gain de pilote de monodiffusion, gp2, utilisé pour commander la puissance de transmission de la troisième pluralité de sous-porteuses.

8. Réseau sans fil à multiplexage par répartition de fréquence orthogonale, OFDM, comprenant une pluralité de stations de base capables de communiquer avec une pluralité de stations d'abonné dans une zone de couverture du réseau OFDM, dans lequel chacune de la pluralité de stations de base est capable de transmettre un premier symbole OFDM dans un premier créneau de temps, dans lequel le premier symbole OFDM comprend une première pluralité de sous-porteuses dans lesquelles des données de diffusion dirigées vers une première pluralité de stations d'abonné sont superposées sur des données de monodiffusion dirigées vers au moins une station d'abonné sélectionnée.

9. Réseau sans fil OFDM selon la revendication 8, dans lequel la première pluralité de sous-porteuses sont distribuées à travers un spectre de fréquences alloué au premier symbole OFDM.

10. Réseau sans fil OFDM selon la revendication 8, dans lequel la station de base est capable d'ajuster un facteur de gain de diffusion, gb, utilisé pour réguler la puissance de transmission des données de diffusion dans la première pluralité de sous-porteuses.

11. Réseau sans fil OFDM selon la revendication 10, dans lequel la station de base est capable d'ajuster un facteur de gain de monodiffusion, gu, utilisé pour réguler la puissance de transmission des données de monodiffusion dans la première pluralité de sous-porteuses.

12. Réseau sans fil OFDM selon la revendication 11, dans lequel le premier symbole OFDM comprend en outre une deuxième pluralité de sous-porteuses utilisées pour transmettre un signal pilote de diffusion dirigé vers la première pluralité de stations d'abonné et une troisième pluralité de sous-porteuses utilisées pour transmettre un signal pilote de monodiffusion dirigé vers l'au moins une station d'abonné sélectionnée.

13. Réseau sans fil OFDM selon la revendication 12, dans lequel la station de base est capable d'ajuster un facteur de gain de pilote de diffusion, gp1, utilisé pour réguler la puissance de transmission de la deuxième pluralité de sous porteuses.

14. Réseau sans fil OFDM selon la revendication 13, dans lequel la station de base est capable d'ajuster un facteur de gain de pilote de monodiffusion, gp2, utilisé pour commander la puissance de transmission de la troisième pluralité de sous-porteuses.

15. Pour une utilisation dans un réseau à multiplexage par répartition de fréquence orthogonale, OFDM, capable de communiquer avec une pluralité de stations d'abonné dans une zone de couverture du réseau OFDM, un procédé de transmission de données de diffusion et de monodiffusion aux stations d'abonné, le procédé comprenant l'étape de :

la transmission d'un premier symbole OFDM dans un premier créneau de temps, dans lequel le premier symbole OFDM comprend une première pluralité de sous-porteuses dans lesquelles des données de diffusion dirigées vers une première pluralité de stations d'abonné sont superposées sur des données de monodiffusion dirigées vers au moins une station d'abonné sélectionnée.

16. Procédé selon la revendication 15, dans lequel la première pluralité de sous-porteuses sont distribuées à travers un spectre de fréquences alloué au premier symbole OFDM.

17. Procédé selon la revendication 15, comprenant en outre l'étape de l'ajustement d'un facteur de gain de diffusion, gb, utilisé pour réguler la puissance de transmission des données de diffusion dans la première pluralité de sous-porteuses.

18. Procédé selon la revendication 17, comprenant en outre l'étape de l'ajustement d'un facteur de gain de monodiffusion, gu, utilisé pour réguler la puissance de transmission des données de monodiffusion dans la première pluralité de sous-porteuses.

19. Procédé selon la revendication 18, dans lequel le premier symbole OFDM comprend en outre une deuxième pluralité de sous-porteuses utilisées pour transmettre un signal pilote de diffusion dirigé vers la première pluralité de stations d'abonné et une troisième pluralité de sous-porteuses utilisées pour transmettre un signal pilote de monodiffusion dirigé vers l'au moins une station d'abonné sélectionnée.

20. Procédé selon la revendication 19, comprenant en outre l'étape de l'ajustement d'un facteur de gain de pilote de diffusion, gp1, utilisé pour réguler la puissance de transmission de la deuxième pluralité de sous porteuses.

21. Procédé selon la revendication 20, comprenant en outre l'étape de l'ajustement d'un facteur de gain de pilote de monodiffusion, gp2, utilisé pour commander la puissance de transmission de la troisième pluralité de sous-porteuses.

22. Première station d'abonné capable de communiquer avec un réseau sans fil à multiplexage par répartition de fréquence orthogonale, OFDM, dans laquelle la première station d'abonné est capable de recevoir et de traiter un premier symbole OFDM dans un premier créneau de temps,
dans laquelle le premier symbole OFDM comprend une première pluralité de sous-porteuses dans lesquelles des données de diffusion dirigées vers une première pluralité de stations d'abonné sont superposées sur des données de monodiffusion dirigées vers au moins une station d'abonné sélectionnée.

23. Première station d'abonné selon la revendication 22, dans laquelle la première station d'abonné comprend une circuiterie de démodulation et de décodage de diffusion capable de recevoir des signaux pilotes de diffusion et des données combinées de diffusion et de monodiffusion générées à partir du premier symbole OFDM et d'extraire un flux de données de diffusion à partir des données combinées de diffusion et de monodiffusion.

24. Première station d'abonné selon la revendication 23, dans laquelle la première station d'abonné comprend en outre une circuiterie d'annulation capable d'annuler le flux de données de diffusion extrait des données combinées de diffusion et de monodiffusion pour récupérer de ce fait des données de monodiffusion dirigées vers la première station d'abonné.

25. Pour une utilisation dans un réseau sans fil à multiplexage par répartition de fréquence orthogonale, OFDM, capable de communiquer avec une pluralité de stations d'abonné dans une zone de couverture du réseau sans fil OFDM, une station de base capable de transmettre un premier symbole OFDM dans un premier créneau de temps à partir d'une première antenne et un deuxième symbole OFDM dans le premier créneau de temps à partir d'une deuxième antenne, dans laquelle le premier symbole OFDM comprend une première pluralité de sous-porteuses utilisées pour transmettre des données de diffusion dirigées vers une première pluralité de stations d'abonné et le deuxième symbole OFDM comprend une deuxième pluralité de sous-porteuses utilisées pour transmettre des données de monodiffusion dirigées vers au moins une station d'abonné sélectionnée, et dans laquelle au moins certaines de la première pluralité de sous-porteuses et de la deuxième pluralité de sous-porteuses sont les mêmes sous-porteuses, de sorte que les données de diffusion soient superposées sur les données de monodiffusion au cours d'une transmission à travers un canal de communication.

FIG.1

FIG.2

FIG.3

FIG.4

EP 1 852 997 B1

FIG.5

FIG.6

FIG.7

EP 1 852 997 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005058089 A1
- US 37492806 A
- US 374928 A